# DEMANDE DE BREVET EUROPEEN

(11) **EP 0 811 966 A1**
(43) Date de publication de la demande: **10.12.1997**
(21) Numéro de dépôt: 97401248.6
(22) Date de dépôt: 04.06.1997
(51) Int. Cl.: G11B 5/33, G11B 5/37

(54) **Tête magnétique d'écriture et de lecture à détecteur de champ à semiconducteur**

(30) Priorité: 06.06.1996 FR 9607000
(71) Demandeur: SILMAG, 38524 Saint-Egrève Cedex (FR)
(72) Inventeur: Lazzari, Jean-Pierre, 38700 Corenc (FR)
(74) Mandataire: Signore, Robert

(57) **Abrégé**

Selon l'invention, le détecteur de champ à semiconducteur (40) est placé dans l'entrefer (24).

Application à l'enregistrement d'informations.

## Description

### Domaine technique

La présente invention a pour objet une tête magnétique d'écriture et de lecture à détecteur de champ à semiconducteur. Elle trouve une application dans l'enregistrement magnétique d'information.

### Etat de la technique

On connaît des têtes magnétiques d'écriture et de lecture comprenant un circuit magnétique avec deux pièces polaires définissant un plan de vol, ces pièces étant séparées par un entrefer. De telles têtes comprennent en outre un moyen d'écriture qui est constitué par un enroulement conducteur où circule un courant d'écriture et un moyen de lecture, généralement constitué par une magnétorésistance.

La figure 1 annexée montre une telle tête dans une variante divulguée par le document FR-A-2 645 314.

Sur cette figure, on voit une tête comprenant un substrat 10, par exemple en silicium, dans lequel a été gravé un caisson 12. Dans ce caisson, une couche magnétique inférieure 14 a été formée électrolytiquement et a été prolongée par deux piliers verticaux 16₁, 16₂. Un bobinage conducteur 18 entoure les piliers. Ce bobinage est noyé dans une couche isolante 20. Le circuit magnétique se complète par une pièce magnétique supérieure formée de deux pièces polaires 22₁, 22₂ séparées par un entrefer 24. Ces pièces définissent un plan de vol 25. Un élément magnétorésistant MR, par exemple en fer-nickel, est disposé sous l'entrefer 24. La tête se déplace devant un support magnétique 30 où sont enregistrées les informations à lire ou à écrire.

Le document FR-A-2 712 420 décrit une tête semblable mais avec un concentrateur de flux constitué par deux pièces magnétiques dont les extrémités sont séparées par un second entrefer. L'élément magnétorésistant est alors disposé en travers de ce second entrefer, sous l'entrefer principal.

D'autres têtes sont encore connues où l'élément magnétorésistant est disposé dans la pièce magnétique inférieure 14 fermant le circuit magnétique, dans un entrefer secondaire pratiqué dans cette pièce.

Le Demandeur a déjà proposé de remplacer la magnétorésistance MR par un détecteur de champ à semiconducteur, du type à effet HALL par exemple. Le document FR-A-2 700 633 préconise ainsi de diviser en deux la pièce magnétique inférieure par un entrefer et d'y loger le dispositif à effet HALL.

Le Demandeur a également proposé de placer le détecteur de champ à semiconducteur dans un intervalle situé entre les pièces polaires et le reste du circuit magnétique (demandes françaises EN 96 04583 et EN 96 04585 du 12 avril 1996).

Bien que donnant satisfaction à certains égards, ces têtes présentent encore un inconvénient. En effet, le signal de lecture qu'elles produisent est affecté d'un bruit qui provient du circuit magnétique emprunté par le champ de lecture. Même dans le cas où le détecteur est placé entre l'une des pièces polaires et l'un des concentrateurs, auquel cas le circuit est de longueur particulièrement réduite, ce bruit subsiste.

Le but de la présente invention est de remédier à cet inconvénient.

### Exposé de l'invention

A cette fin, l'invention propose de placer le détecteur à semiconducteur directement dans l'entrefer, au niveau même du plan de vol. Ce détecteur est donc situé au plus près du support d'enregistrement. Il est sensible au champ de fuite émanant de ce support, sans qu'intervienne de circuit magnétique de canalisation du flux. Sa position dans l'entrefer d'écriture assure, du même coup, une concordance géométrique parfaite entre l'opération d'écriture et celle de lecture.

Par ailleurs, les dimensions du détecteur peuvent être appropriées aux dimensions de la zone d'enregistrement, c'est-à-dire avoir une largeur égale à la largeur de la piste d'enregistrement, et une longueur (comptée dans le sens du déplacement de la tête) inférieure ou égale à la longueur de la zone d'enregistrement.

De façon précise, la présente invention a pour objet une tête magnétique d'écriture et de lecture comprenant un circuit magnétique avec deux pièces polaires définissant un plan de vol et séparées par un entrefer, cette tête comprenant encore un moyen d'écriture constitué par un enroulement conducteur entourant le circuit magnétique et un moyen de lecture, cette tête étant caractérisée par le fait que le moyen de lecture est constitué par un détecteur de champ à semiconducteur placé dans l'entrefer, au niveau du plan de vol.

L'introduction du détecteur dans l'entrefer oblige à élargir quelque peu celui-ci. Cet élargissement est favorable à une bonne pénétration des lignes de champ à l'intérieur de la couche d'enregistrement, mais réduit l'intensité du champ d'écriture et accroît la longueur (comptée dans le sens de déplacement de la tête) de la transition magnétique. Il convient donc de soigner particulièrement la cartographie du champ d'écriture. Pour cela, l'invention prévoit de diviser la couche magnétique supérieure en deux couches magnétiques distinctes, une couche inférieure avec un certain entrefer, et une couche supérieure avec un autre entrefer, plus étroit que le premier. C'est dans cet entrefer étroit que sera disposé le détecteur.

De préférence, le matériau constituant la couche supérieure est en matériau à forte aimantation, tel que FeNTa, FeCuCo par exemple. Le matériau constituant la couche inférieure peut être en FeNi, ou également en matériau à forte aimantation.

### Brève description des dessins

- la figure 1, déjà décrite, représente une tête d'écriture et de lecture selon l'art antérieur ;
- la figure 2 représente une tête conforme à l'invention ;
- la figure 3 montre un détail d'une tête selon l'invention, au niveau des entrefers ;
- la figure 4 montre la structure connue d'un détecteur à effet HALL à puits quantiques ;
- la figure 5 montre la structure du détecteur à effet HALL utilisé dans l'invention ;
- la figure 6 montre, en coupe, la place des contacts électriques ;
- la figure 7 montre les contacts électriques en vue de dessus ;
- la figure 8 montre, en vue de dessus, la découpe du détecteur à semiconducteur ;
- la figure 9 montre, en vue de dessus, les plots de contact et les traversées de courant ;
- la figure 10 montre un détecteur à effet HALL monté, avec ses connexions ;
- la figure 11, enfin, montre une étape d'isolement latéral du détecteur à semiconducteur.

### Exposé détaillé d'un mode de réalisation

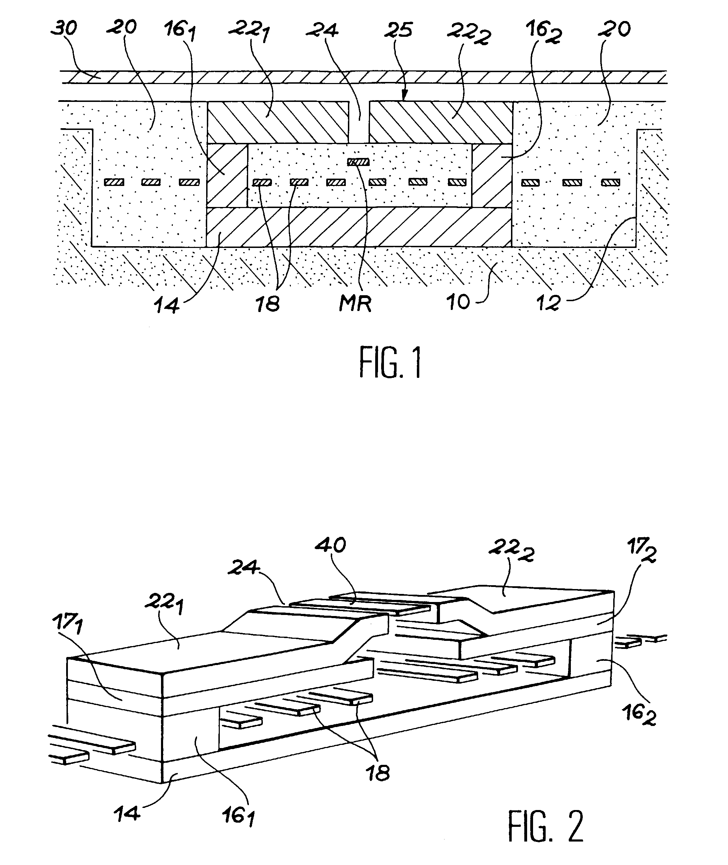

La figure 2 montre, en perspective, une tête magnétique selon l'invention. Sur cette figure, on retrouve certains éléments déjà représentés sur la figure 1, à savoir la couche magnétique inférieure 14, les deux piliers 16₁, 16₂, l'enroulement conducteur 18 et les pièces polaires 22₁, 22₂ séparées par un entrefer 24. Dans le mode de réalisation illustré, le circuit magnétique- se complète par deux concentrateurs 17₁, 17₂.

Selon l'invention, un détecteur de champ à semiconducteur 40 est placé dans l'entrefer, au niveau du plan de vol, c'est-à-dire à la même hauteur que la partie haute des pièces polaires 22₁, 22₂.

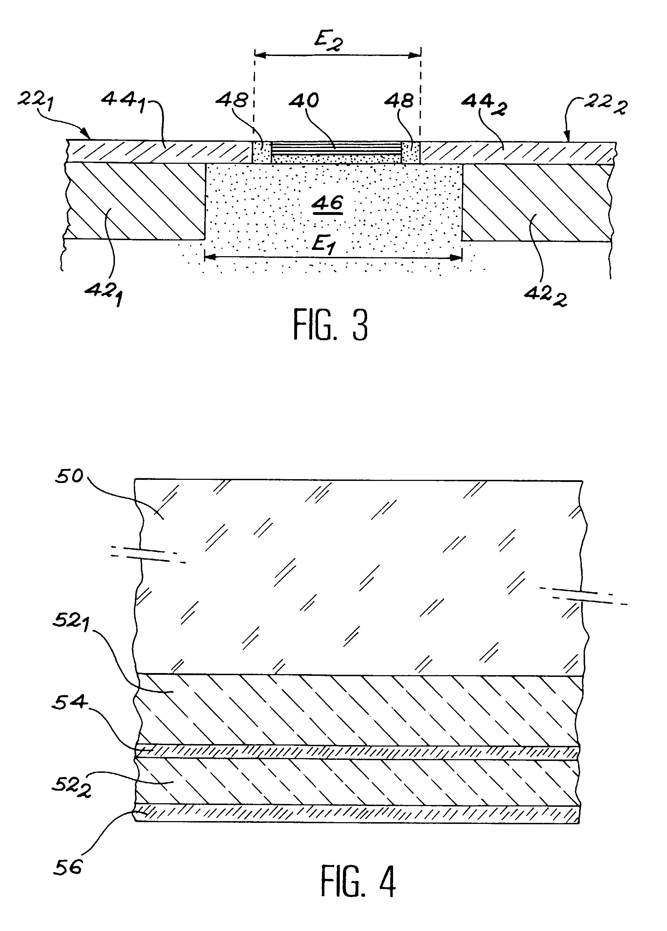

La figure 3 montre un détail de cette structure, dans la variante où la couche magnétique supérieure est divisée en deux couches, l'une, inférieure, 42₁, 42₂ définissant un premier entrefer E1, l'autre, supérieure 44₁, 44₂ définissant un second entrefer E2. La longueur de ce dernier entrefer, comptée dans le sens du déplacement de la tête, peut être comprise entre 0,2 et quelques microns. C'est l'entrefer d'écriture proprement dit. L'entrefer E1 de la couche inférieure (dite aussi sous-couche) est plus long d'une fraction de micromètres ou de quelques micromètres.

L'épaisseur de la couche inférieure 42₁, 42₂ peut être comprise entre 1 et 3 µm et l'épaisseur de la couche supérieure comprise entre 0,1 µm et quelques micromètres. L'entrefer inférieur E1 est comblé par un matériau isolant 46, de la silice par exemple. Le détecteur de champ à semiconducteur 40 est placé dans l'entrefer étroit E2. Il est noyé dans un isolant 48, qui peut être encore de la silice.

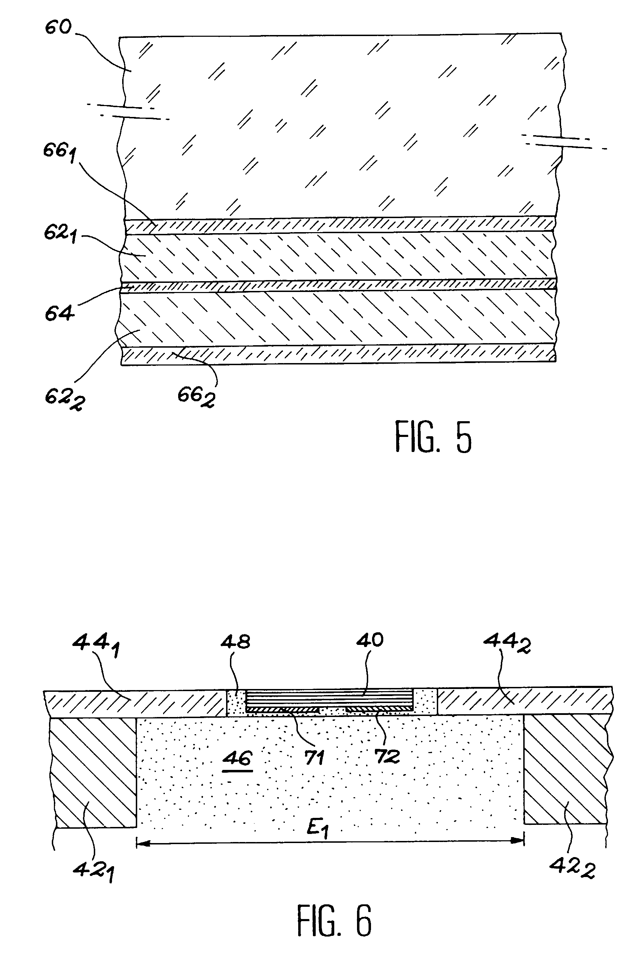

Le détecteur de champ à semiconducteur utilisé selon l'invention peut être de tout type connu, mais il peut avantageusement présenter une originalité qui est illustrée à l'aide des figures 4 et 5. Sur la figure 4, tout d'abord, on voit une structure classique obtenue en déposant sur un substrat 50, par exemple en GaAs, un empilement de couches comprenant une première couche 52₁ de confinement, par exemple en AlGaSb, une couche 54 active, formée de puits quantiques par exemple, à base de InAs, une seconde couche de confinement 52₂, par exemple en AlGaSb, et enfin une couche de passivation 56, par exemple en GaSb.

La première couche de confinement 52₁, en AlGaSb est assez épaisse, de l'ordre de 1 ou quelques micromètres. La seconde couche de confinement 52₂ est, en général, plus fine que la première, et par exemple de l'ordre de quelques dizaines de nanomètres.

Une telle structure, prise à l'identique, ne conviendrait guère à l'invention. D'abord parce que, une fois le substrat 50 supprimé, la première couche de confinement 52₁ apparaîtrait en surface et s'oxyderait rapidement. Ensuite, parce que la couche active 54 serait assez éloignée de la surface, et cela en raison de la couche de confinement 52₁, qui est relativement épaisse.

Selon l'invention, on réalise donc un empilement différent, qui est illustré sur la figure 5. Sur un substrat 60, par exemple en GaAs, on dépose d'abord une couche 66₁, par exemple en GaSb, d'épaisseur de l'ordre d'une dizaine de nanomètres. Cette couche, une fois que le substrat 60 aura disparu, constituera une couche de passivation. On dépose ensuite une première couche de confinement 62₁, par exemple en AlGaSb, mais contrairement à l'habitude, cette couche est choisie mince, de l'ordre de quelques dizaines de nanomètres. Puis on dépose la couche sensible 64, par exemple en InAs, d'une dizaine de nanomètres, et une seconde couche de confinement 62₂, par exemple en AlGaSb, qui peut être plus épaisse que la première. Enfin, on dépose une seconde couche de passivation 66₂, par exemple en GaSb. Ainsi, lorsque le substrat 60 aura disparu, et grâce à la minceur de la couche 62₁ la couche sensible 64 sera très proche de la surface du plan de vol (quelques dizaines de nanomètres).

La figure 6 montre schématiquement où sont disposées les connexions électriques du détecteur. On voit qu'elles sont situées sous le détecteur 40, sous forme de plots 71 et 72 dont la structure apparaîtra plus loin.

On va décrire maintenant un exemple de réalisation de la tête conforme à l'invention. Il va de soi que ce procédé n'est décrit qu'à titre explicatif et ne limite en rien l'invention.

On commence par réaliser un circuit magnétique classique, comme il est enseigné dans les documents cités en introduction, jusqu'à l'obtention de la couche magnétique formées des deux parties 42₁, 42₂ séparée par l'entrefer E1, lequel est comblé par un isolant 46.

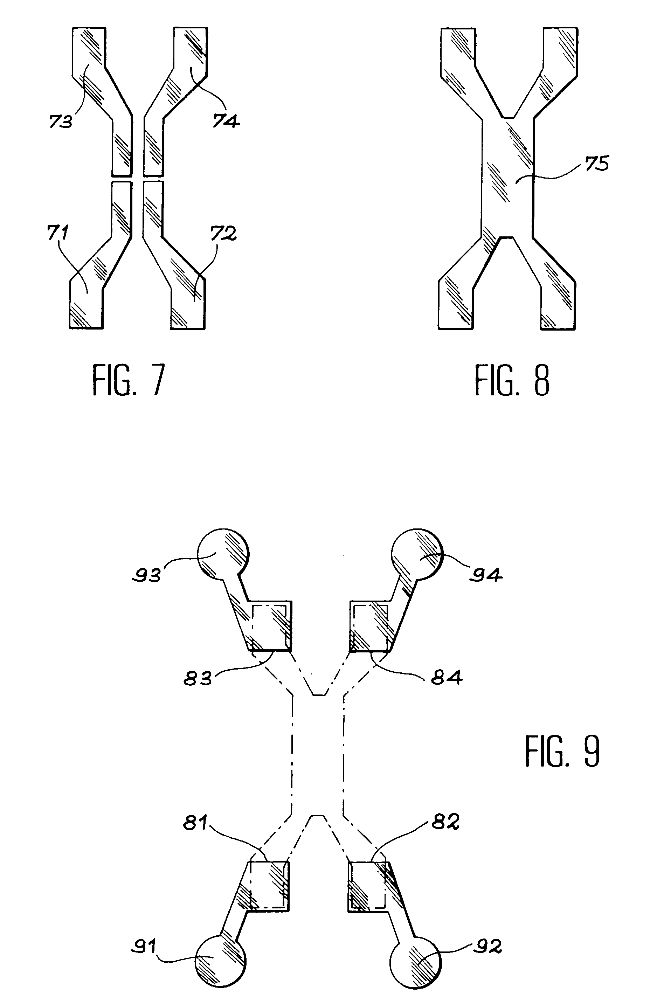

Séparément, on réalise un empilement conforme à la figure 5. Sur la dernière couche 66₂, en GaSb, on dépose une résine photosensible ou électrosensible, puis, en utilisant soit un photorécepteur à haute résolution, soit une machine d'insolation à faisceau d'électrons, on insole la résine pour définir quatre motifs représentés en vue de dessus sur la figure 7. Après révélation de la résine, on dépose une couche conductrice, par exemple en AuGe, par pulvérisation cathodique. Par une opération de décollement (dite "lift off"), on élimine les surfaces excédentaires pour ne laisser subsister que des contacts ohmiques 71, 72, 73 et 74.

On réalise ensuite une autre photolithographie, en prenant les contacts comme masque. On grave ainsi successivement la couche 66₂, la couche de confinement 62₂, la couche sensible 64, la couche de confinement 62₁, la couche de passivation 66₁, pour atteindre le substrat 60. On obtient alors un empilement 75, dont le contour est représenté, en vue de dessus, sur la figure 8. Ce contour suit les contours extérieurs des contacts ohmiques 71 à 74.

Lorsqu'on a réalisé la partie classique de la tête, on a pris soin de réaliser, sur la couche isolante 46 dans laquelle la sous-couche 42₁, 42₂ est formée, des connexions dont l'allure est représentée sur la figure 9. Ces connexions comprennent des plots de contact rectangulaires 81, 82, 83, 84, qui vont venir en regard des extrémités des connexions 71, 72, 73, 74, et des traversées de courant cylindriques 91, 92, 93, 94, traversant l'ensemble de la structure et débouchant sur la face opposée au plan de vol. Ces connexions peuvent être en cuivre.

Sur les parties rectangulaires 81 à 84, on dépose un alliage métallique fondant à basse température, tel que SuPb par exemple. A l'aide d'aligneurs deux faces, on assemble le sous-ensemble constitué par le circuit magnétique et le sous-ensemble constitué par l'empilement de couches. L'alignement peut s'effectuer à ±0,4 µm. La position et la dimension des plots de contact sont telles que, même dans le pire des cas, la superposition des contacts entre les deux sous-ensembles est correcte. On recuit alors l'ensemble à température suffisante pour fondre l'alliage et réaliser la soudure des plots de connexion.

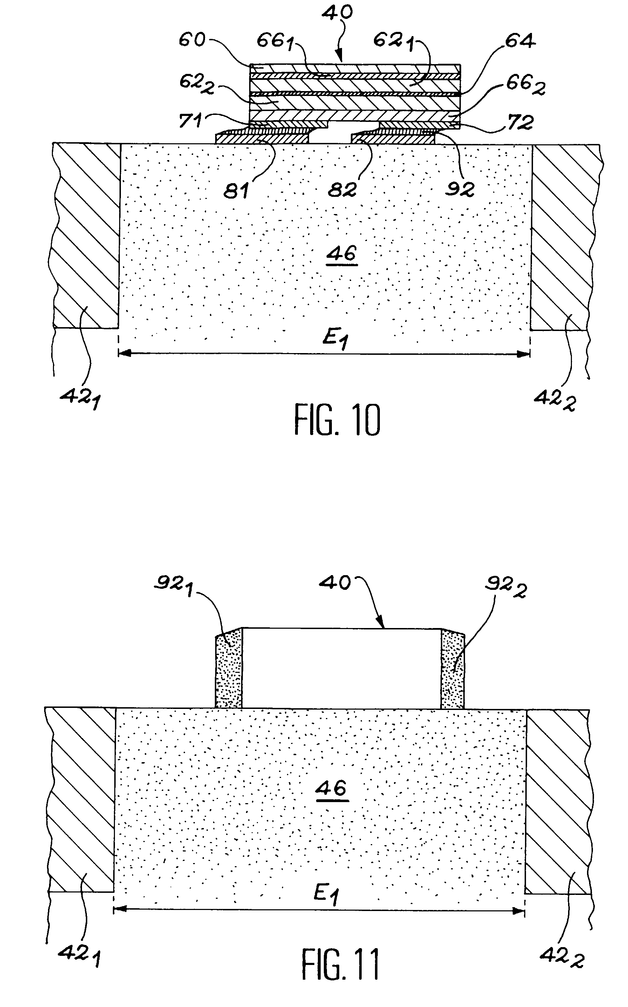

On réduit ensuite l'épaisseur du substrat 60 et l'on obtient l'ensemble illustré sur la figure 10, où l'on a supposé qu'une fine couche de substrat 60 a été préservée. Sur cette figure, le décentrement du détecteur par rapport à l'entrefer E1 de la sous-couche 42₁, 42₂ a été exagéré pour montrer qu'il n'a guère d'importance et que les contacts sont tout de même établis.

On dépose ensuite sur l'ensemble une couche mince d'isolant, par exemple en silice, que l'on grave pleine tranche par gravure ionique réactive, pour ne laisser subsister que deux parois verticales isolant latéralement le détecteur. Ces deux parois sont référencées 92₁, 92₂ sur la figure 11.

Il reste alors à déposer, par exemple par pulvérisation cathodique, la couche magnétique supérieure à forte aimantation, pour obtenir la tête qui a déjà été représentée sur la figure 3. On pourra planariser l'ensemble, et, par gravure ionique (non réactive), on attaquera la surface pour réduire l'épaisseur de la couche résiduelle de GaAs (couche 60) pour que la couche sensible 64 soit le plus près possible du plan de vol, donc du support d'enregistrement.

## Revendications

1. Tête magnétique d'écriture et de lecture comprenant un circuit magnétique (14, 16₁, 16₂, 22₁, 22₂) avec deux pièces polaires (22₁, 22₂) définissant un plan de vol (25) et séparées par un entrefer (24), cette tête comprenant encore un moyen d'écriture constitué par un enroulement conducteur (18) entourant le circuit magnétique et un moyen de lecture, cette tête étant caractérisée par le fait que le moyen de lecture est constitué par un détecteur de champ à semiconducteur (40) placé dans l'entrefer (24), au niveau du plan de vol (25).

2. Tête magnétique selon la revendication 1, caractérisée par le fait que les pièces polaires (22₁, 22₂) sont formées, au niveau de l'entrefer, par une couche magnétique inférieure (42₁, 42₂) ayant un premier entrefer (E1) et une couche magnétique supérieure (44₁, 44₂) ayant un second entrefer (E2) plus étroit que le premier entrefer (E1), le détecteur de champ à semiconducteur (40) étant placé dans le second entrefer (E2).

3. Tête magnétique selon la revendication 2, caractérisée par le fait que la couche magnétique supérieure (44₁, 44₂) est en matériau magnétique à forte aimantation.

4. Tête magnétique selon la revendication 2, caractérisée par le fait que le premier entrefer (E1) a une première largeur et le second entrefer (E2) une seconde largeur, celle-ci étant plus étroite que la première largeur du premier entrefer (E1), les largeurs étant comptées dans le sens perpendiculaire au sens de déplacement de la tête par rapport au support.

5. Tête magnétique selon la revendication 2, caractérisée par le fait que le premier entrefer (E1) formé par la couche magnétique inférieure (42₁, 42₂) est comblé par un premier matériau isolant (46) sur lequel repose le détecteur à semiconducteur (40).

6. Tête magnétique selon la revendication 1, caractérisée par le fait que le détecteur de champ à semiconducteur est du type à effet HALL.

7. Tête magnétique selon la revendication 6, caractérisée par le fait que le détecteur à effet HALL comprend un empilement de couches constitué par une couche de passivation (66₁), une première couche de confinement (62₁), une couche sensible à puits quantiques (64), une seconde couche de confinement (62₂) et une couche de contact (66₂), la première couche de confinement séparant la couche sensible (64) du plan de vol étant plus mince que la seconde couche de confinement (62₂).

8. Tête magnétique selon la revendication 7, caractérisée par le fait que le détecteur à semiconducteur (40) comprend des connexions électriques (70, 71, 72, 73, 74) disposées sous la couche de contact (66₂) et s'étendant transversalement par rapport aux pièces polaires (22₁, 22₂).

9. Tête magnétique selon la revendication 8, caractérisée par le fait que les connexions électriques (71, 72, 73, 74) du détecteur (40) sont en contact électrique avec des plots de contact (81, 82, 83, 84) disposés sur le premier matériau isolant (46) comblant le premier entrefer (42).

10. Tête magnétique selon la revendication 9, caractérisée par le fait que les plots de contact (81, 82, 83, 84) sont reliés à des traversées de courant (91,92, 94, 95), traversant la tête et débouchant sur la face située côté opposé au plan de vol.
